# EUROPÄISCHE PATENTANMELDUNG

(11) **EP 3 000 997 A1**
(43) Veröffentlichungstag der Anmeldung: **30.03.2016**
(21) Anmeldenummer: 15001879.4
(22) Anmeldetag: 25.06.2015
(51) Int. Cl.: F01L 3/02, F01L 3/06, F01L 3/08, F01L 3/22

(54) **VENTIL FÜR EINEN VERBRENNUNGSMOTOR**

(30) Priorität: 11.09.2014 DE 102014013503
(71) Anmelder: MAN Truck & Bus AG, 80995 München (DE)
(72) Erfinder: Boehme, Ulrich, 90455 Nürnberg (DE)

(57) **Zusammenfassung**

Die Erfindung betrifft ein Ventil (1), vorzugsweise ein Abgas- und/oder Gaswechselventil (1), für einen Verbrennungsmotor, vorzugsweise für ein Kraftfahrzeug. Das Ventil (1) umfasst einen Ventilschaft (2) und einen Ventilteller (3). Der Ventilteller (3) weist eine Vorderfläche (3.1) und eine Rückfläche (3.2) auf. Das Ventil (1) zeichnet sich insbesondere dadurch aus, dass die Vorderfläche (3.1) des Ventiltellers (3) nach außen ausgebaucht ist und das Ventil (1) als Vollventil ausgeführt ist und alternativ oder ergänzend sich eine neutrale Faser (4) des Ventiltellers (3) abschnittsweise lastseitig einer gedachten Bezugsebene (BE) erstreckt, wobei die Bezugsebene (BE) durch die wirksame Mitte (M) einer Ventilsitzfläche (3.3) des Ventiltellers (3) und quer zum Ventilschaft (2) verläuft.

## Beschreibung

Die Erfindung betrifft ein Ventil, vorzugsweise ein Abgas- und/oder Gaswechselventil, für einen Verbrennungsmotor, zweckmäßig für ein Kraftfahrzeug, insbesondere ein Nutzfahrzeug, z. B. einen Lastkraftwagen oder einen Omnibus. Ebenso kann das Ventil für Offroad-, marine und/oder stationäre Verbrennungsmotoren dienen.

Ventile für Verbrennungsmotoren von Kraftfahrzeugen mit einem Ventilschaft und einem Ventilteller sind in den unterschiedlichsten Ausführungsformen bekannt. So sind aus dem Stand der Technik Ventile mit flacher Vorderfläche und Hohlventile mit nach außen ausgebauchter Vorderfläche bekannt. Die ausgebauchte Vorderfläche dient dazu, Platz für Kühlkanäle-/ räume zu schaffen oder die mechanische Festigkeit des durch einen Hohlraum geschwächten Ventils zu erhöhen. Durch hohe Zünddrücke und insbesondere durch innermotorische Abgasmaßnahmen (z. B. Abgasnormen, z. B. Euro-Norm 5 oder besser) erzieltem, sehr sauberem Abgas neigen Ventilteller und Ventilsitze zu starkem, abrasivem Verschleiß. Grund dafür ist die elastische Verformung des Ventiltellers und das Gleiten des Ventiltellers auf dem Ventilsitz während den Zünddruckbelastungen. Problematisch ist, dass sehr sauberes Abgas gegenüber schmutzigem Abgas keinen oder nur noch sehr wenig Schmierstoff (Ruß) zur Verschleißminderung zwischen Ventil und Ventilsitz zur Verfügung stellt. Um den Verschleiß zwischen Ventil und Ventilsitz zu reduzieren, ist es aus der Praxis bekannt, relativ teure verschleißfeste Werkstoffe und/oder kleine, allerdings strömungsungünstige Ventilsitzwinkel (z. B. kleiner 30°) zu verwenden.

Eine Aufgabe der Erfindung ist es, ein konstruktiv einfach bzw. kostengünstig herzustellendes Ventil für einen Verbrennungsmotor zu schaffen, das trotz sauberem, insbesondere rußarmen Abgas bei Zünddruckbelastung nicht oder zumindest nur geringfügig auf dem Ventilsitzring gleitet und dadurch einen geringen Verschleiß aufweist, vorzugsweise ohne Strömungsnachteile in Kauf nehmen zu müssen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Ventil, vorzugsweise ein Abgas- und/oder Gaswechselventil, für einen Verbrennungsmotor, vorzugsweise für ein Kraftfahrzeug. Das Ventil weist einen Ventilschaft und einen Ventilteller auf. Der Ventilteller umfasst eine Vorderfläche und eine Rückfläche. Die Vorderfläche dient zweckmäßig zum lastseitigen, insbesondere Brennraum- und/oder Druckraum-seitigen, Platzieren, so dass sie zweckmäßig im Betrieb der Lastseite, insbesondere der Druck- und/oder Brennraum-Seite zugewandt ist.

Das Ventil zeichnet sich insbesondere dadurch aus, dass die Vorderfläche des Ventiltellers nach außen ausgebaucht ist und das Ventil als Vollventil ausgeführt ist. Das Ventil kann somit insbesondere als Wölb-Vollventil bezeichnet werden. Alternativ oder ergänzend zeichnet sich das Ventil insbesondere dadurch aus, dass sich die neutrale Faser des Ventiltellers zumindest abschnittsweise, zweckmäßig zum überwiegenden Teil, lastseitig, also im Betrieb auf der Lastseite, insbesondere auf einer Druck- und/oder Brennraum-Seite, einer fiktiven bzw. gedachten Bezugsebene erstreckt, die durch die wirksame Mitte der Ventilsitzfläche des Ventiltellers und quer zum Ventilschaft verläuft. Die wirksame Mitte der Ventilsitzfläche des Ventiltellers wird zweckmäßig durch die Mitte der Kontaktfläche zwischen der Ventilsitzfläche des Ventiltellers und eines Ventilsitzes hierfür definiert.

Die neutrale Faser des Ventiltellers kann sich insbesondere zum überwiegenden Teil lastseitig der Bezugsebene erstrecken, z. B. zu mehr als 50%, 60%, 70%, 80%, 90% oder sogar zu mehr als 95% und/oder quasi gänzlich im Ventiltellerbereich seitlich des Ventilschafts (also insbesondere unter Ausblendung des Ventilschafts).

Im Rahmen der Erfindung erstreckt sich die resultierende Wirklinie des Ventiltellers, also quasi dessen neutrale Faser, zweckmäßig zum überwiegenden Teil lastseitig der resultierenden Wirklinie der Ventilsitzfläche, also quasi der Bezugsebene.

Als Vollventil im Rahmen der Erfindung sind vorzugsweise massive Ventile gemeint, insbesondere Ventile mit einem massiven Ventilschaft und/oder einem massiven Ventilteller, also insbesondere ohne Hohlraum, ohne Kühlhohlraum und/oder ohne Kühlleitungen.

Die Ventilsitzfläche des Ventiltellers ist vorzugsweise schräg ausgeführt.

Es ist möglich, dass der zweckmäßig kanalseitige Tulpenwinkel der Rückfläche des Ventiltellers kleiner ist als 20°, 15°, 12°, 10° oder 8°. Dabei kann die Rückfläche z. B. geradlinig oder gekrümmt ausgeformt sein.

Eine gewisse Verschleißminderung kann auch durch Wahl eines kleinen Ventilsitzwinkels von im Extremfall 0° erzielt werden, wodurch jedoch der Strömungswiderstand des Ventils steigt, so dass der Gaswechsel behindert wird und der Kraftstoffverbrauch des Verbrennungsmotors steigt.

Gemäß einer Ausführungsform der Erfindung ist der Ventilsitzwinkel der Ventilsitzfläche des Ventiltellers zweckmäßig größer als 25°, 30°, 35°, 40° oder 45° und/oder kleiner als 70°, 65°, 60°, 55° oder 50°, so dass eine Gleit- und somit Verschleißreduzierung ohne Strömungsnachteile ermöglicht wird.

Die neutrale Faser, also insbesondere die Materialmitte, des Ventiltellers verläuft insbesondere so, dass sie zur Lastseite (insbesondere Brennraum- und/oder zur Druckraum-Seite) hin und/oder nach außen ausgebaucht ist.

Der Gipfelbereich der neutralen Faser kann relativ zum Ventilschaft vorzugsweise außermittig und/oder koaxial verlaufen, insbesondere ringförmig.

Es ist möglich, dass die Vorderfläche des Ventiltellers sphärisch, parabolisch oder kegelstumpfförmig ausgebaucht ist. Eine sphärische oder parabolische Ausbauchung ist zwar ideal oder zumindest vorteilhaft, allerdings aufwendig zu fertigen. Sie können deshalb durch eine zweckmäßig flache kegelstumpfförmige Ausbauchung angenähert werden.

Der Gipfelbereich der Vorderfläche des Ventiltellers ist relativ zum Ventilschaft vorzugsweise mittig ausgerichtet ist.

Der Verbrennungsmotor ist vorzugsweise ein Diesel-, oder Gas- bzw. Otto-Verbrennungsmotor.

Die Rückfläche des Ventiltellers ist vorzugsweise flacher ausgeformt als die Vorderfläche des Ventiltellers. Dabei kann die Rückfläche und/oder die Vorderfläche z. B. geradlinig und/oder gekrümmt ausgeformt sein.

Wie schon zuvor erwähnt, wird die wirksame Mitte der Ventilsitzfläche des Ventiltellers durch die Mitte der Kontaktfläche zwischen der Ventilsitzfläche des Ventiltellers und eines Ventilsitzes hierfür definiert. Im Rahmen der Erfindung kann die wirksame Mitte der Ventilsitzfläche des Ventiltellers somit relativ zu der Ventilsitzfläche des Ventiltellers z. B. tatsächlich mittig angeordnet sein, allerdings auch außermittig.

Die Erfindung ist nicht auf ein Ventil beschränkt, sondern umfasst auch eine Ventil-Ventilsitz-Kombination mit einem Ventil wie hierin offenbart und einem Ventilsitz hierfür.

Der Erfindung umfasst zudem ein Kraftfahrzeug, vorzugsweise ein Nutzfahrzeug, insbesondere einen Lastkraftwagen oder einen Omnibus, mit einem Verbrennungsmotor, der einen Brenn- und/oder Druckraum mit einer Ventil-Ventilsitz-Kombination wie hierin beschrieben umfasst.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Querschnittsansicht eines Teils eines Ventils gemäß einer Ausführungsform der Erfindung im Vergleich zu einem Ventil gemäß Stand der Technik,
- Figur 2: zeigt eine schematische Darstellung der Wirkweise des Ventils gemäß einer Ausführungsform der Erfindung, schematisch reduziert auf einen Biegeträger mit mittigem Gelenk auf zwei Auflagern, und
- Figur 3: zeigt eine schematische Darstellung der Wirkweise eines Ventils gemäß Stand der Technik, schematisch reduziert auf einen Biegeträger mit mittigem Gelenk auf zwei Auflagern.

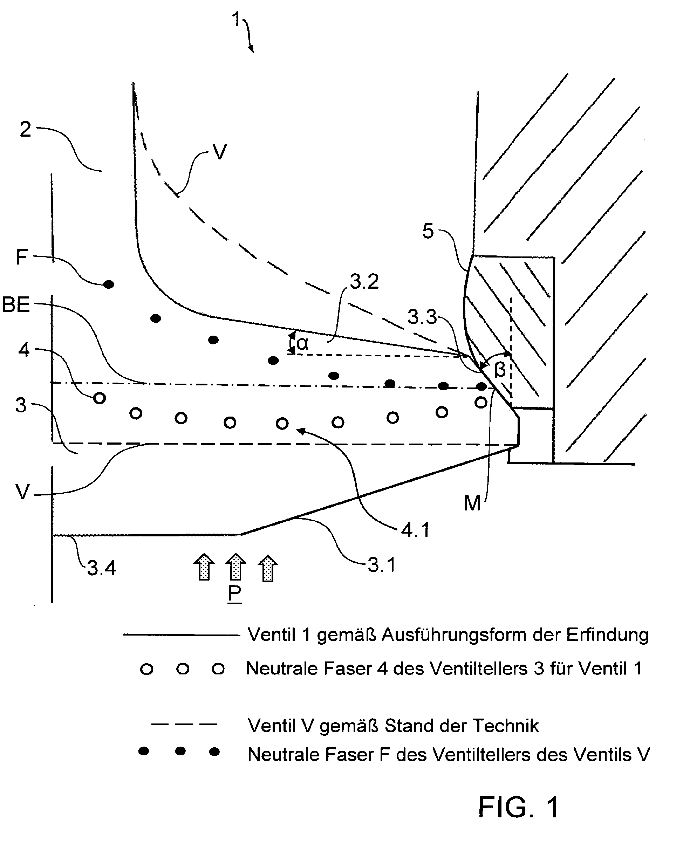

Figur 1 zeigt eine schematische Ansicht eines Teils eines Ventils 1 gemäß einer Ausführungsform der Erfindung für einen Otto- oder Gasmotor bzw. einen die Abgasnorm Euro ≥ 5 erfüllenden Diesel-Motor, so dass das Ventil 1 mit relativ sauberen, rußarmen Abgas beaufschlagt wird.

Das Ventil 1 umfasst einen Ventilschaft 2 und einen Ventilteller 3. Der Ventilteller 3 umfasst eine Vorderfläche 3.1, die im Betrieb einem Druck-/Brennraum P (Lastseite) zugewandt ist, eine Rückfläche 3.2, die im Betrieb dem Druck-/Brennraum P abgewandt ist, und eine zweckmäßig schräge Ventilsitzfläche 3.3 zum Aufsitzen auf einem Ventilsitz (Sitzring) 5.

Die Vorderfläche 3.1 ist nach außen, im Betrieb zur Lastseite P (Druck-/Brennraum) hin ausgebaucht und das Ventil 1 ist als massives Vollventil und somit hohlraumfrei, insbesondere kühlleitungsfrei und kühlhohlraumfrei ausgeführt.

Die neutrale Faser 4 und somit die Mittellinie des Ventiltellers 3 ist ebenfalls zur Lastseite P hin ausgebaucht, insbesondere so, dass sie sich zweckmäßig zumindest zum überwiegenden Teil lastseitig, also im Betrieb auf der Lastseite P, einer fiktiven bzw. gedachten Bezugsebene BE erstreckt. Die Bezugsebene BE verläuft durch die wirksame Mitte M der Ventilsitzfläche 3.3 des Ventiltellers 3 und quer zum Ventilschaft 2. Die neutrale Faser 4 kennzeichnet quasi die resultierende Wirklinie des Ventiltellers 3, während die Bezugsebene BE quasi die resultierende Wirklinie der Ventilsitzfläche 3.3 kennzeichnet.

Die wirksame Mitte M der Ventilsitzfläche 3.3 des Ventiltellers 3 wird somit durch die im Betrieb resultierende Mitte der Kontaktfläche zwischen der Ventilsitzfläche 3.3 des Ventiltellers 3 und des Ventilsitzes 5 definiert.

Insbesondere dadurch, dass das Ventil 1 als Vollventil mit nach außen ausgebauchter Vorderfläche 3.1 ausgeführt ist, kann die neutrale Faser 4 des Ventiltellers 3 zumindest großteils lastseitig der Bezugsebene BE verlaufen, so dass bei Zünddruckbelastung kein oder nur ein sehr geringes Gleiten der Ventilsitzfläche 3.3 auf dem Ventilsitz 5 entsteht. Da Gleiten die Hauptursache des Verschleißes zwischen Ventil 1 und Ventilsitz 5 ist, wird folglich trotz kein oder kaum Schmiermittel in Form von Ruß lieferndem, relativ sauberem Abgas der Verschleiß vermindert oder beseitigt.

Der Gipfelbereich 3.4 der Vorderfläche 3.1 des Ventiltellers 3 ist relativ zum Ventilschaft 2 im Wesentlichen mittig ausgerichtet.

Der Gipfelbereich 4.1 der neutralen Faser 4 verläuft wegen dem Ventilschaft 2 relativ zum Ventilschaft 2 außermittig und ringförmig koaxial zum Ventilschaft 2.

Die Rückfläche 3.2 des Ventiltellers 3 ist zweckmäßig flacher ausgeführt als die Vorderfläche 3.1 des Ventiltellers 3. Die Vorderfläche 3.1 und/oder die Rückfläche 3.2 können z. B. geradlinig oder gekrümmt ausgeführt sein.

Der Tulpenwinkel α der Rückfläche 3.2 des Ventiltellers 3 ist kleiner als 20°, in der gezeigten Ausführungsform ca. 7°.

Der Ventilsitzwinkel β der Ventilsitzfläche 3.3 ist größer als 25°, in der gezeigten Ausführungsform ca. 40°.

In Figur 1 ist darüber hinaus ein Ventil V gemäß Stand der Technik mit einer neutralen Faser F angedeutet.

Der Vergleich zwischen dem Ventil 1 und dem Ventil V gemäß Stand der Technik zeigt, dass der kanalseitige Tulpenwinkel α des Ventils 1 kleiner (flacher) ist als bei dem Ventil V, im Gegenzug die Vorderfläche 3.1 allerdings verstärkt und ausgebaucht ist, so dass die neutrale Faser 4 zum Druck-/Brennraum P hin ausgebaucht ist. Die Ausformung des Ventils 1 führt zu einer Verstärkung des Ventils 1, insbesondere des Ventiltellers 3 auf der Brenn-/Druckraum P zugewandten Seite und einem Abmagern auf der Brenn-/Druckraum P abgewandten Seite. Die neutrale Faser F des Ventils V gemäß Stand der Technik verläuft relativ zu der Bezugsebene BE auf der der Lastseite P abgewandten Seite, also in Figur 1 oberhalb der Bezugsebene BE.

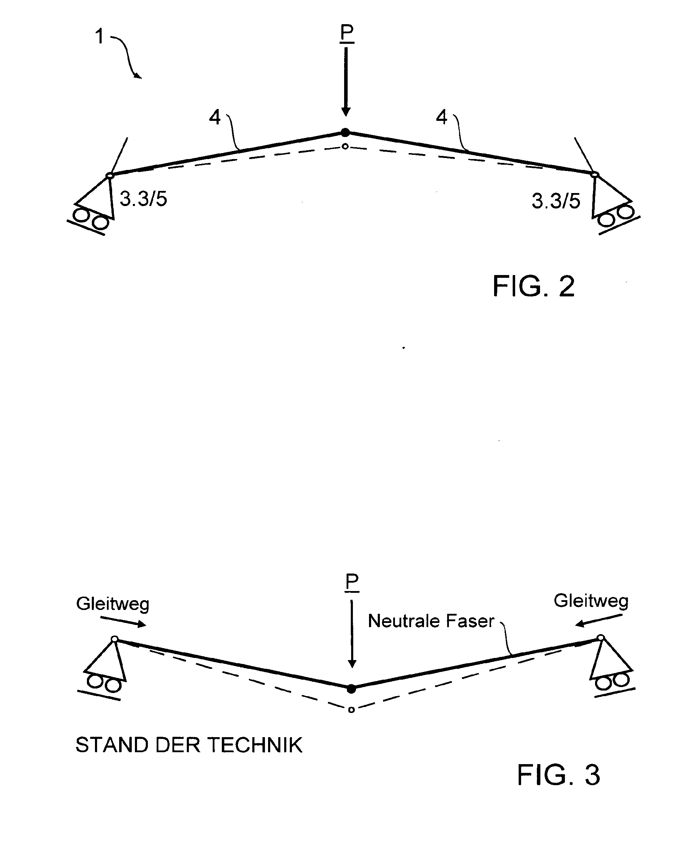

Figur 2 zeigt schematisch das Ventil 1 der Figur 1 schematisch reduziert auf einen Biegeträger mit mittigem Gelenk auf zwei Auflagern. Der in Figur 2 zu sehende Biegeträger entspricht angenähert der neutralen Faser 4 des Ventiltellers 3. Zu sehen ist nochmals, dass die neutrale Faser 4 zur Lastseite P (Druck-/Brennraum) hin ausgebaucht ist. Die Auflagerbewegung (3.3/5) wird nach außen hin abgeschwächt oder sogar auf quasi Null reduziert, der Verschleiß dadurch abgeschwächt oder sogar auf quasi Null reduziert..

Figur 3 zeigt zum Vergleich ein Ventil gemäß Stand der Technik ebenfalls schematisch reduziert auf einen Biegeträger mit mittigem Gelenk auf zwei Auflagern. Das Ventil kann z. B. ein Ventil mit flacher Vorderfläche oder ein Wölb-Hohlventil sein. Die neutrale Faser ist nicht zur Laststeite P hin ausgebaucht, sondern zur der der Lastseite P abgewandten Seite, also in Figur 3 nach unten. Das Ventil gleitet deshalb im Betrieb relativ stark auf dem Ventilsitz, was mit einem hohen Verschleiß einhergeht.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Ventil gemäß einer Ausführungsform der Erfindung
- 2: Ventilschaft
- 3: Ventilteller
- 3.1: Vorderfläche des Ventiltellers
- 3.2: Rückfläche des Ventiltellers
- 3.3: Ventilsitzfläche
- 3.4: Gipfelbereich der Vorderfläche des Ventiltellers
- 4: Neutrale Faser
- 4.1: Gipfelbereich der neutralen Faser
- 5: Ventilsitz
- α: Tulpenwinkel der Rückfläche des Ventiltellers
- β: Ventilsitzwinkel der Ventilsitzfläche des Ventiltellers
- P: Lastseite, insbesondere Brenn- und/oder Druckraum-Seite
- BE: Bezugsebene
- M: Wirksame Mitte der Ventilsitzfläche

- V: Ventil gemäß Stand der Technik
- F: Neutrale Faser des Ventiltellers des Ventils V

## Patentansprüche

1. Ventil (1), vorzugsweise Abgas- und/oder Gaswechselventil (1), für einen Verbrennungsmotor, vorzugsweise für ein Kraftfahrzeug, mit: einem Ventilschaft (2) und einem eine Vorderfläche (3.1) und eine Rückfläche (3.2) aufweisenden Ventilteller (3), **dadurch gekennzeichnet, dass**
a) die Vorderfläche (3.1) des Ventiltellers (3) nach außen ausgebaucht ist und das Ventil (1) als Vollventil ausgeführt ist, und/oder
b) sich eine neutrale Faser (4) des Ventiltellers (3) abschnittsweise lastseitig einer gedachten Bezugsebene (BE) erstreckt, wobei die Bezugsebene (BE) durch die wirksame Mitte (M) einer Ventilsitzfläche (3.3) des Ventiltellers (3) und quer zum Ventilschaft (2) verläuft.

2. Ventil (1) nach Anspruch 1, **dadurch gekennzeichnet, dass** ein Tulpenwinkel (α) der Rückfläche (3.2) des Ventiltellers (3) kleiner ist als 20°, 15°, 12°, 10° oder 8°.

3. Ventil nach Anspruch 1 oder 2, **dadurch gekennzeichnet, dass** die Ventilsitzfläche (3.3) des Ventiltellers (3) abgeschrägt ausgeführt ist und/oder ein Ventilsitzwinkel (β) der Ventilsitzfläche (3.3) des Ventiltellers (3) größer ist als 25°, 30°, 35°, 40° oder 45°.

4. Ventil (1) nach einem der vorhergehenden Ansprüche, **dadurch gekennzeichnet, dass** der Ventilsitzwinkel (β) der Ventilsitzfläche (3.3) des Ventiltellers (3) kleiner ist als 70°, 65°, 60°, 55° oder 50°.

5. Ventil (1) nach einem der vorhergehenden Ansprüche, **dadurch gekennzeichnet, dass** die neutrale Faser (4) des Ventiltellers (3) zur Lastseite (P) hin ausgebaucht ist.

6. Ventil (1) nach einem der vorhergehenden Ansprüche, **dadurch gekennzeichnet, dass** der Gipfelbereich (4.1) der neutralen Faser (4) relativ zum Ventilschaft (2) außermittig verläuft.

7. Ventil (1) nach einem der vorhergehenden Ansprüche, **dadurch gekennzeichnet, dass** die Vorderfläche (3.1) des Ventiltellers (3) sphärisch, parabolisch oder kegelstumpfförmig ausgebaucht ist.

8. Ventil (1) nach einem der vorhergehenden Ansprüche, **dadurch gekennzeichnet, dass** der Gipfelbereich (3.4) der Vorderfläche (3.1) des Ventiltellers (3) relativ zum Ventilschaft (2) mittig ausgerichtet ist.

9. Ventil (1) nach einem der vorhergehenden Ansprüche, **dadurch gekennzeichnet, dass** der Verbrennungsmotor ein Otto-, Diesel- oder Gas- Motor ist.

10. Ventil (1) nach einem der vorhergehenden Ansprüche, **dadurch gekennzeichnet, dass** die Rückfläche (3.2) des Ventiltellers (3) flacher ist als die Vorderfläche (3.1) des Ventiltellers (3).

11. Ventil (1) nach einem der vorhergehenden Ansprüche, **dadurch gekennzeichnet, dass** sich die neutrale Faser (4) des Ventiltellers (3) zum überwiegenden Teil lastseitig der Bezugsebene (BE) erstreckt.

12. Ventil (1) nach einem der vorhergehenden Ansprüche, **dadurch gekennzeichnet, dass** die wirksame Mitte (M) der Ventilsitzfläche (3.3) des Ventiltellers (3) durch die Mitte der Kontaktfläche zwischen der Ventilsitzfläche (3.3) des Ventiltellers (3) und eines Ventilsitzes (5) definiert wird.

13. Ventil-Ventilsitz-Kombination mit einem Ventil (1) nach einem der vorhergehenden Ansprüche und einem Ventilsitz (5) für das Ventil (1).

14. Kraftfahrzeug, vorzugsweise Nutzfahrzeug, mit einem Verbrennungsmotor, der einen Brenn- und/oder Druckraum (P) mit einer Ventil-Ventilsitz-Kombination nach Anspruch 13 umfasst.
